# EUROPÄISCHE PATENTSCHRIFT

(11) **EP 3 195 713 B1**
(45) Veröffentlichungstag und Bekanntmachung des Hinweises auf die Patenterteilung: **18.01.2023**
(21) Anmeldenummer: 17401001.7
(22) Anmeldetag: 23.01.2017
(51) Int. Cl.: A01C 17/00, A01C 21/00

(54) **VERFAHREN UND DÜNGERSTREUER**
METHOD AND MANURE DISTRIBUTOR
PROCÉDÉ ET ÉPANDEUR D'ENGRAIS

(30) Priorität: 25.01.2016 DE 102016101184
(43) Veröffentlichungstag der Anmeldung: 26.07.2017
(73) Patentinhaber: Amazonen-Werke H. Dreyer SE & Co. KG, 49205 Hasbergen (DE)
(72) Erfinder: Rahe, Florian, 49504 Lotte (DE)

(56) Entgegenhaltungen:
- EP-A2- 2 777 376
- WO-A2-01/44642
- DE-A1-102007 049 652

## Beschreibung

Die Erfindung betrifft ein Verfahren zum Erzeugen eines Streubildes mit einem Düngerstreuer.

Wie beispielsweise in der DE 19 72 33 59 A1 offenbart, eignen sich für den Austrag von Dünger auf landwirtschaftlichen Anbauflächen Schleuderstreuer, insbesondere solche mit zwei nebeneinander angeordneten und gegenläufig angetriebenen Streuscheiben. Hierbei wird der Dünger in Abhängigkeit vom Streuscheibentyp und der Düngersorte in Form eines charakteristischen Streufächers oder Streubildes durch Anschlussfahren über eine vorgegebene Arbeitsbreite auf dem Feld verteilt. Die EP2777376 A2 betrifft ein Verfahren zur Regelung einer Einrichtung zur Veränderung des Streuringsektors eines Scheibenstreuers sowie einen Scheibenstreuer. Die Einrichtung umfasst z.B. ein System, das z.B. die Regelung in Abhängigkeit der verwendeten Wurfschaufel durchführt. Es wird kein Mastersystem für mehrere Systeme zum Priorisieren eines oder mehrerer Systeme in Abhängigkeit bestimmter Parameter offenbart.

Zum Erzeugen eines bestimmten Streubildes kann z.B. vom Landwirt ein entsprechendes Grundstreubild eingegeben werden. Zur Erzeugung dieses Streubilds werden diverse Stellglieder mit entsprechenden Sollwerten angesteuert/geregelt.

Mittlerweile gibt es diverse Systeme, die z.B. die Sollwerte derart verändern, dass ein vom Landwirt eingegebenes Grundstreubild entsprechend zu einem neuen Sollstreubild abgewandelt wird, beispielsweise beim Grenzstreuen oder bei der Teilbreitenschaltung. Es gibt auch Systeme, die die Sollwerte für ein entsprechendes Grundstreubild korrigieren, z.B. bei Seitenwind, um schließlich wieder das gewünschte Grundstreubild zu erhalten. Bislang ist jedoch immer nur ein einzelnes System aktiv.

Um die Streubilder an diverse Bedingungen in idealer Art und Weise anzupassen, liegt der vorliegenden Erfindung daher die Aufgabe zugrunde, ein Verfahren und eine Vorrichtung bereitzustellen, die ermöglichen, ein von unterschiedlichen Bedingungen abhängiges ideales Streubild zu erzeugen.

Erfindungsgemäß wird diese Aufgabe durch die Merkmale der Ansprüche 1 und 9 gelöst.

Bei dem erfindungsgemäßen Verfahren sind also mehrere Systeme aktiv, die mindestens eine Sollwertvorgabe zum Ansteuern/Regeln von Stellgliedern zum Erzeugen eines entsprechenden Streubilds vorgeben. Unter Sollwertvorgabe versteht man entweder einen Absolutwert z.B. eine Zahlenangabe für einen entsprechenden Sollwert, wie beispielsweise Drehzahl oder aber auch eine relative Angabe wie eine Abweichung von einem Grundsollwert (beispielsweise für ein Grundstreubild, das von einem Landwirt eingegeben wird oder bereits in einem System, z.B. einem Mastersystem, hinterlegt ist oder für ein Sollstreubild, das einem z.B. von einem System angepassten Grundstreubild entspricht). Abweichungen können beispielsweise eine prozentuale Angabe, Faktor, Relativwert etc. sein. Damit es bei der Verwendung mehrerer Systeme zu keinen Überschneidungen bzw. Kollisionen gibt, ist gemäß der vorliegenden Erfindung ein Mastersystem vorgesehen, das eines der mehreren Systeme auswählt und diesem System den Vorrang gibt, um die Stellglieder in Abhängigkeit seiner Sollwertvorgabe anzusteuern bzw. zu regeln.

Alternativ dazu können auch mehrere Systeme ausgewählt werden und die Sollwertvorgaben der ausgewählten Systeme miteinander verrechnet werden, beispielsweise durch im Mastersystem gespeicherte Algorithmen, wobei beispielsweise ein Mittelwert der Sollwertvorgaben gebildet wird oder aber die Sollwertvorgaben unterschiedlich gewichtet oder über Formeln miteinander verrechnet werden.

Unter Verrechnen der Sollwertvorgaben wird auch verstanden, dass bei mehreren Sollwerten für ein und dasselbe Stellglied die Sollwertvorgaben von manchen Systemen nicht berücksichtigt werden, z.B. mit einem Faktor Null multipliziert werden. Das bedeutet, dass es somit auch möglich ist, dass Sollwertvorgaben bestimmter Systeme Priorität haben und manche nicht berücksichtigt werden.

Das Mastersystem kann eine getrennte Einheit sein, die mit den einzelnen Systemen verbunden ist. Die Funktionen des Mastersystems können auch - bei baulicher Trennung - in einem der anderen Systeme integriert sein, d.h., dass dann dieses eine System auch die Rolle des Mastersystems übernimmt. Dann müssen die anderen Systeme mit diesem System verbunden sein.

Das Mastersystem wird erfindungsgemäß in Abhängigkeit von mindestens einem vorbestimmten Parameter und/oder von mindestens einem Messparameter entweder eines der mehreren Systeme auswählen oder aber mehrere Systeme auswählen, bei denen dann die Sollwertvorgaben verrechnet werden. So kann beispielsweise bei
starkem Wind (wenn der Messwert über einem Grenzwert liegt) ein Windsteuersystem als alleiniges System ausgewählt werden, das die Sollwerte zum Ansteuern der Stellglieder festlegt. Die Sollwertvorgaben der weiteren Systeme werden dann beispielsweise nicht berücksichtigt. Beim Grenzstreuen (Messparameter: Grenzstreuen ja oder nein, z.B. über GPS detektiert) und bei Seitenwind (Messparameter) kann beispielsweise ein Windsteuersystem und ein Grenzstreusystem ausgewählt werden, wobei die Sollwertvorgaben entsprechend verrechnet werden können und die anderen Systeme unberücksichtigt bleiben können.

Im Mastersystem kann z.B. auch auf der Grundlage eines vorbestimmten Parameters eingegeben werden oder abgelegt sein, welches der Systeme das Sollstreubild mit entsprechenden Grundeinstellungen der Sollwerte vorgibt, die dann gegebenenfalls von mindestens einem der anderen Systemen korrigiert werden.

Es kann also in Abhängigkeit der vorbestimmten Parameter und/oder der Messparameter bestimmt werden, ob nur ein System vom Mastersystem ausgewählt wird oder aber mehrere und auch welches oder welche. Als Parameter kann z.B. mindestens ein Messparameter folgender Gruppe verwendet werden: Windrichtung, Windstärke, Grenzstreuung ja oder nein, Hanglage ja oder nein.

In Abhängigkeit des mindestens einen vorbestimmten Parameters und/oder Messparameters können bei mehreren Systemen auch die Algorithmen angepasst, d.h. z.B. aus vorab eingespeicherten Algorithmen ausgewählt werden. Das heißt, dass bei unterschiedlichen Systemkombinationen unterschiedliche Algorithmen verwendet werden können. Dabei können selbstverständlich die Sollwertvorgaben für die Stellglieder, die die linke Schleuderscheibe betreffen und Sollwertvorgaben, die die rechte Schleuderscheibe betreffen, unterschiedlich sein und auch unterschiedlich verrechnet werden, um beispielsweise unsymmetrische Sollstreubilder zu erzielen. Dabei kann beispielsweise vorab im System eingestellt werden, welche Systeme bzw. welche Sollwertvorgaben entsprechender Systeme Priorität haben oder aber die Auswahl wird in Abhängigkeit von Messparametern, d.h. von aktuellen Bedingungen, abhängig gemacht.

Die Systeme sind erfindungsgemäß mindestens zwei Systeme folgender Gruppe:
System zum Erzeugen eines Grenzstreubildes beim Grenzstreuen an einer Feldgrenze. Hier werden die Sollwertvorgaben für die Schleuderscheibe, die der Feldgrenze zugewandt ist, derart angepasst, dass z.B. ein Dünger auf der entsprechenden Seite nicht über eine Feldgrenze geworfen wird. Weiter kann ein Windsteuersystem zum Erzeugen eines Streubildes in Abhängigkeit der Windstärke und Windrichtung vorgesehen sein. Hier wird das Windsteuersystem derartige Sollwertvorgaben machen, dass das vom Wind verzerrte Ist-Streubild wieder an das Grundstreubild bzw. Soll-Streubild angepasst wird.

Ferner kann ein System zum Anpassen der Düngerkonzentration in Abhängigkeit des Ortes vorgesehen sein. Schließlich kann ein System zur Teilbreitensteuerung beinhaltet sein zur Erzeugung eines Streubildes einer vorbestimmten Arbeitsbreite. Hier werden die Sollwertvorgaben derart angepasst, dass eine bestimmte Breite nicht unter- bzw. überschritten wird.

Darüber hinaus gibt es ein Erkennungssystem zum Erfassen eines Ist-Streubilds beispielsweise mit Hilfe von Ultraschalldetektoren, Radarsensoren, Kameras etc., wobei das Ist-Streubild an ein Grundstreubild bzw. Soll-Streubild angepasst werden kann. Dabei werden entsprechende Sollwertvorgaben gemacht.

Ferner gibt es ein sogenanntes Switch-Point-System, das optimierte Einstellungen der Verteilung in der Nähe von Vorgewendefahrgassen bei annähernd rechtwinkliger Einfahrt in das Vorgewende (45° - 135°) vornimmt. Hierdurch wird eine Verbesserung der Homogenität der Düngerverteilung erreicht.

Auf der Grundlage der Sollwertvorgaben kann das Mastersystem dann bestimmte Sollwerte an Regeleinrichtungen für die einzelnen Stellglieder weiterleiten. Solche Sollwerte für die einzelnen Regelungen können beispielsweise sein: Düngermenge pro Zeit, Abwurfwinkel, insbesondere Position einer Aufgabefläche auf einer Schleuderscheibe, Wurfweite, insbesondere Drehzahl. Es können auch entsprechend proportionale Werte zu den oben genannten Werten als Sollwerte dienen.

Die Stellglieder können beispielsweise Stellglieder aus folgender Gruppe sein: Aktor eines jeweiligen Düngerdosierorgans, Einrichtung zum Einstellen der Position der Aufgabefläche auf der jeweiligen Schleuderscheibe, d.h. Position des Einleitsystems, Antrieb der jeweiligen Schleuderscheibe.

Vorteilhafterweise regelt ein Regelsystem als Regelgröße die Wurfweite und/oder die Düngermenge pro Zeit, die ausgetragen wird und/oder den Abwurfwinkel. Dabei werden entsprechende Istwerte der Wurfweite und/oder ausgebrachten Düngermenge pro Zeit und/oder des Abwurfwinkels bestimmt und mit den jeweiligen Sollwerten verglichen, die von dem Mastersystem vorgegeben bzw. weitergeleitet werden.

Gemäß einer bevorzugten Ausführungsform ist es auch möglich, dass das Mastersystem mindestens eines der Systeme, insbesondere das Erkennungssystem und/oder Windsteuersystem als System bestimmt, das Priorität hat und das die Sollwerte für ein Soll-Streubild bestimmt bzw. vorgibt, wobei das Soll-Streubild vorzugsweise dem vom Landwirt eingegebenen Grundstreubild entspricht. Das Mastersystem kann dann die Sollwerte des Soll-Streubildes durch mindestens ein weiteres System weiter anpassen.

Das Mastersystem kann eine getrennte Einheit sein, mit der die anderen Systeme zur Datenkommunikation verbunden sind oder die Funktionen des Mastersystems können mit mindestens einem der Systeme zu einer Einheit zusammengefasst sein, wobei die anderen Systeme mit dieser Einheit zur Datenübertragung verbunden sind.

Die Erfindung wird nachfolgend unter Bezugnahme der folgenden Figuren näher erläutert.
- Fig. 1: zeigt grob schematisch eine Seitenansicht eines an einen Ackerschlepper angekoppelten Düngerstreuers.
- Fig. 2: zeigt grob schematisch eine Draufsicht auf einen Düngerstreuer.
- Fig. 3: zeigt ein Streubild mit und ohne Seitenwindeinfluss.
- Fig. 4: zeigt grob schematisch eine Vorrichtung gemäß einem Ausführungsbeispiel gemäß der vorliegenden Erfindung.
- Fig. 5a-5c: zeigen verschiedene Regelsysteme für einen Düngerstreuer.
- Fig. 6a, 6b, 6c: zeigen verschiedene Regelsysteme für einen Düngerstreuer gemäß einer weiteren Ausführungsform.

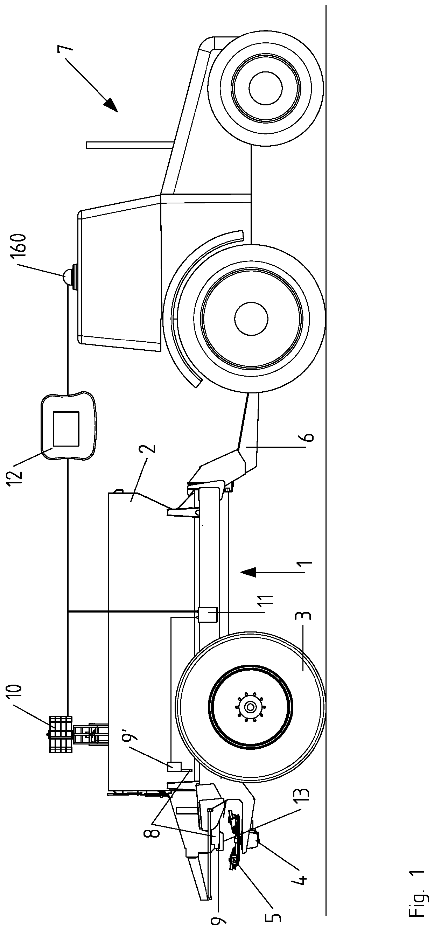

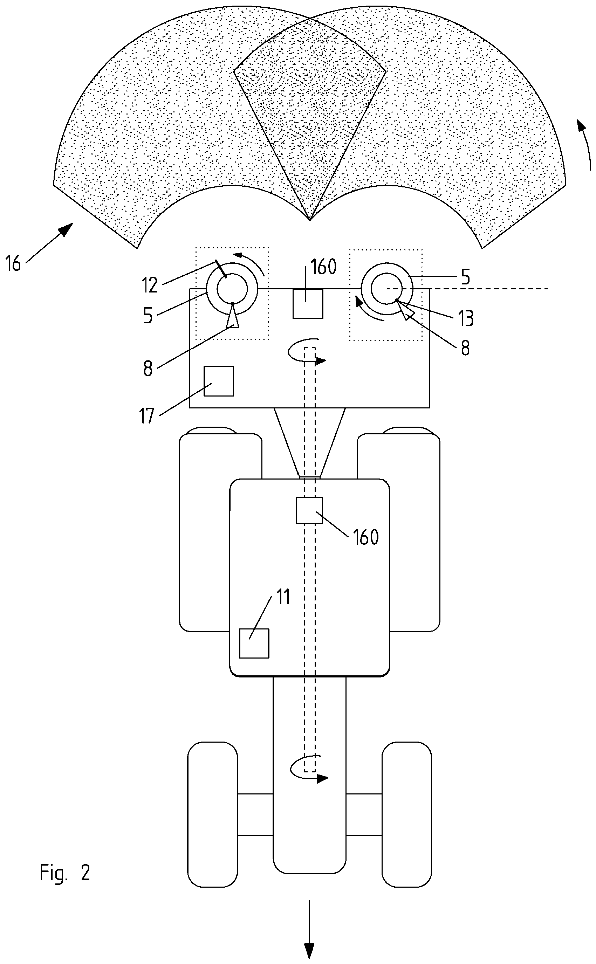

Fig. 1 und 2 zeigen einen Düngerstreuer, hier in Form eines Zentrifugaldüngerstreuers 1 mit einem Vorratsbehälter 2 und einem Fahrwerk 3. Der Düngerstreuer ist über die Zugdeichsel 6 an einen Ackerschlepper 7 angekoppelt. Bei diesem Ausführungsbeispiel ist der Düngerstreuer 1 als Zweischeibenstreuer ausgebildet und umfasst zwei separat ansteuerbare Schleuderscheiben 5. Die Schleuderscheiben 5 sind, wie durch die Pfeile (Fig. 2) angedeutet, über einen motorischen Antrieb 4 getrennt antreibbar. Bei diesem Ausführungsbeispiel drehen sich die Scheiben beispielsweise nach außen. Auf den Schleuderscheiben 5 können Wurfschaufeln 12 (Fig. 2) ausgebildet sein, die beispielsweise auf bekannte Weise hinsichtlich ihres Anstellwinkels verstellbar befestigt sind. Der Übersichtlichkeit halber ist nur eine einzige Wurfschaufel 12 stark schematisch angedeutet. Ferner ist oberhalb der Schleuderscheiben 5 jeweils ein Einleitsystem 13 für Dünger vorgesehen, wobei die Position der Aufgabefläche individuell verstellbar ist, z.B. in/entgegen der Drehrichtung der Schleuderscheibe 5 und/oder radial. Über ein jeweiliges Dosierorgan 8 kann über entsprechende Aktoren 9 die eingeleitete Menge pro Zeit des Düngers auf jeder Seite eingestellt werden. Der Düngerstreuer 1 und/oder der Schlepper umfassen ferner wenigstens ein GPS-System 160 und wenigstens eine Steuereinheit zum Ansteuern/Regeln der Stellglieder zur Erzeugung eines vorbestimmten Streubildes 16. Die Steuerung kann software- oder hardwaremäßig realisiert werden, wobei vorzugsweise ein Bordcomputer 11 vorgesehen ist, in dem z.B. bestimmte Auswerte- und Steuerprogramme hinterlegt sein können.

Fig. 2 zeigt beispielsweise einen für das Arbeiten entlang einer Feldfahrgasse symmetrisch angeordneten Normalstreufächer 16 hinter dem Düngerstreuer 1. Ein entsprechendes Streubild ist beispielsweise als Grundstreubild bzw. vorbestimmtes Streubild in bekannter Weise im Bordcomputer 11 bzw. einer entsprechenden Steuereinrichtung eingespeichert. Die einzelnen Stellglieder werden dann von der Steuereinrichtung bzw. dem Bordcomputer mit entsprechenden Sollwerten S1, S2, S3 angesteuert bzw. geregelt, wie nachfolgend noch näher erläutert wird.

Dabei werden als Stellglieder z.B. die Antriebselemente 4 der jeweiligen Schleuderscheiben 5 angesteuert und/oder aber ein entsprechender Aktor 9 eines jeweiligen Dosierorgans 8 und/oder Mittel zum Einstellen der Position der Aufgabefläche 13 des Düngers, d.h. z.B. Mittel zum Einstellen der Stellung eines über einer Schleuderscheibe 5 ausgebildeten Einleitsystems 13. Aber auch die Winkelposition der Wurfschaufeln 12 können auf einen entsprechenden Sollwert eingestellt werden. Dabei können die Stellglieder für die linke und rechte Seite, d.h. die linke und rechte Schleuderscheibe 5, separat angesteuert werden.

Der Düngerstreuer 1 kann auch mehrere Einrichtungen zum Erfassen von diversen Parametern aufweisen, beispielsweise eine Einrichtung 10 zum Messen der Windstärke und der Windrichtung, wobei die Daten z.B. an die Steuereinrichtung bzw. den Bordcomputer 11 übermittelt werden. Der Düngerstreuer 1 kann beispielsweise auch eine Einrichtung zum Erfassen der Neigung (nicht dargestellt) aufweisen oder eine Einrichtung zum Bestimmen, ob der Düngerstreuer in einem Grenzstreumodus arbeiten muss (z.B. GPS). Der Bordcomputer 11 weist einen Anzeigebildschirm 12 auf. Mit der Einrichtung zum Messen der Windstärke und Windrichtung können die jeweils wirkenden Windverhältnisse im Bereich des Streubilds erfasst werden. In dem Bordcomputer 11 bzw. der Steuereinrichtung können Stoffdaten über die Streueigenschaften mittels geeigneter Eingabevorrichtungen eingegeben werden. Die Stoffdaten wurden vorab im Labor ermittelt. Die im Labor ermittelten verschiedenen Stoffeigenschaften der Düngersorten, die Einfluss auf das Flugverhalten haben, sowie bestimmte aerodynamische Gleichungen ermöglichen z.B. die Wurfparabeln bei Seitenwind zu berechnen.

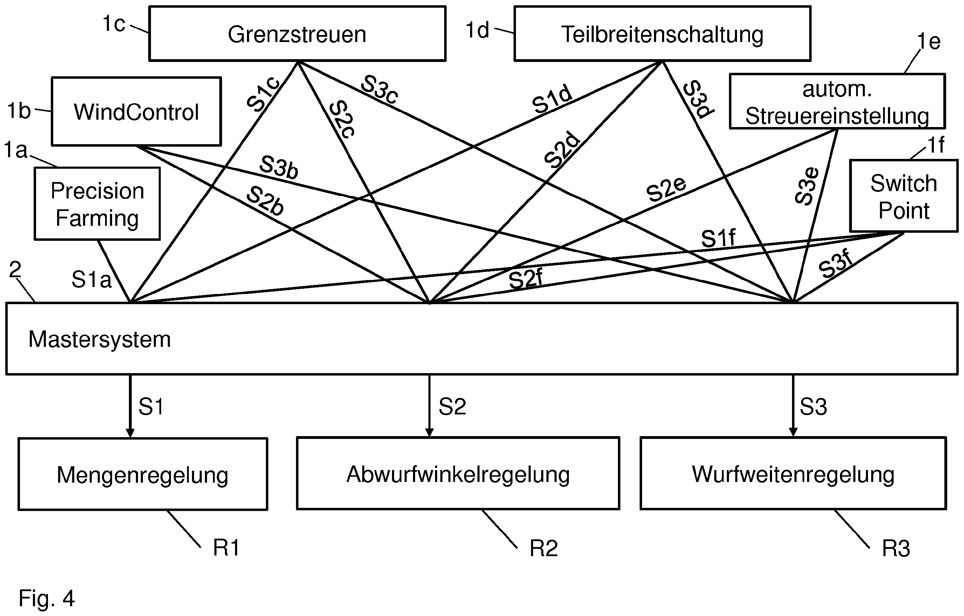

Wie insbesondere aus Fig. 4 hervorgeht, umfasst die erfindungsgemäße Vorrichtung mehrere Systeme 1a-1f, die mindestens eine Sollwertvorgabe S1a-S1f, S2aS2f , S3a-S3f zum Ansteuern/Regeln von Stellgliedern zum Erzeugen eines entsprechenden Streubildes vorgeben. Bei dem erfindungsgemäßen Verfahren sind also mehrere Systeme aktiv, die mindestens eine Sollwertvorgabe zum Ansteuern/Regeln von Stellgliedern zur Erzeugung eines entsprechenden Streubildes machen. Diese Systeme können in der Steuereinrichtung oder aber im Bordrechner integriert sein, können aber baulich getrennte Systeme sein, oder Systeme bei denen mehrere Einzelsysteme in einer Einheit kombiniert sind. Die Systeme senden entsprechende Sollwertvorgaben S1a-f, S2a-f, S3a-f an ein Mastersystem 2, das auf der Grundlage dieser Vorgaben entsprechende Sollwerte S1, S2, S3 für diverse Stellglieder berechnet. Auch das Mastersystem kann in der Steuereinrichtung oder im Bordcomputer als Programm integriert sein oder aber als getrennte Einheit ausgebildet sein oder in einem der Systeme 1a-f integriert sein.

Unter Sollwertvorgaben versteht man entweder eine Zahlenangabe für einen entsprechenden Sollwert, wie beispielsweise Wurfweite, ausgeworfene Düngermenge pro Zeit etc. oder aber auch eine relative Angabe, wie eine Abweichung von einem Grundsollwert, (beispielsweise für ein Grundstreubild, das von einem Landwirt eingegeben wird oder bereits in einem System hinterlegt ist oder von einem anderen System berechnet wurde), wie beispielsweise eine prozentuale Angabe, Faktor, Relativwert etc.

Als Systeme sind beispielsweise ein System 1a zur Anpassung der Düngerkonzentration in Abhängigkeit des Ortes vorgesehen. Das heißt, dass das System bestimmt, wie viel Dünger pro Zeit von der Streuscheibe 5 an verschiedenen Orten abgeworfen wird. Die Orte können beispielsweise über GPS bestimmt werden. Das System 1a, das in Fig. 4 als "Precision farming" bezeichnet ist, gibt nur eine Sollwertvorgabe S1a an das Mastersystem 2 aus.

Das System 1b ist ein Windsteuersystem (in Fig. 4 mit "Windcontrol" bezeichnet) zum Erzeugen eines Streubilds in Abhängigkeit der Windstärke und Windrichtung, d.h. dass über das Windsteuersystem ein durch Wind verzerrtes Streubild wieder an ein Grundstreubild angepasst werden kann, wobei die entsprechenden Sollwertvorgaben S2b, S3b an das Mastersystem 2 weitergeleitet werden.

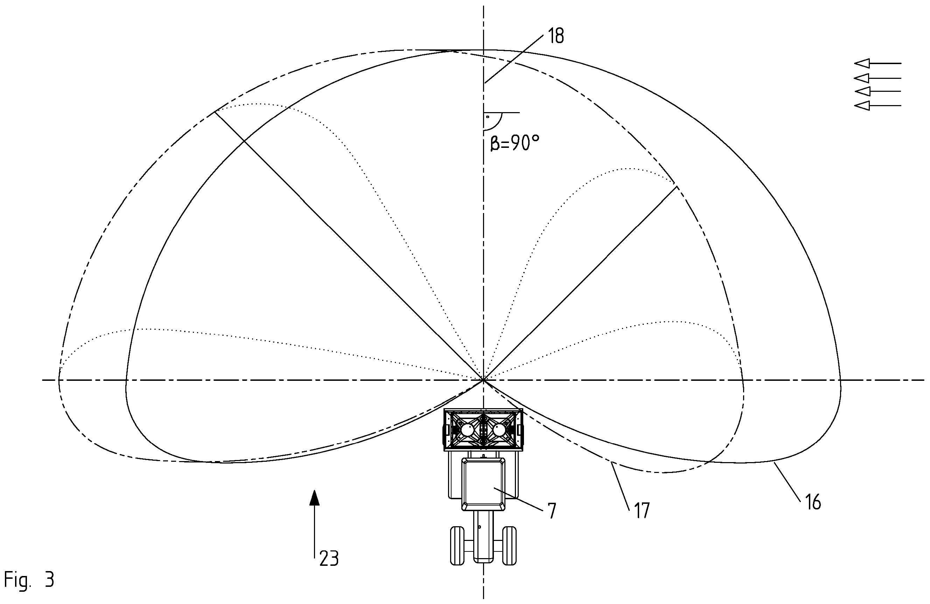

Das Windsteuersystem ist beispielsweise in Fig. 3 näher dargestellt.

Fig. 3 zeigt in schematischer Weise einen Düngerstreuer, an dem ein Ackerschlepper 7 angebaut ist und Streubilder, d.h. Streufächer 16 und 17 mit und ohne Seitenwindeinfluss. Mit durchgezogener Linie 16 ist der vorbestimmte sich aus den beiden überlappenden Streufächern ergebende Gesamtstreufächer ohne Seitenwindeinfluss dargestellt. Dieser entspricht beispielsweise dem vorbestimmten Sollstreubild bzw. Grundstreubild 16. Mit strichpunktierten Linien ist der sich aus den beiden überlappenden Streufächern ergebende hörnchenförmige Gesamtstreufächer 17 mit Seitenwindeinfluss dargestellt, der dem Ist-Streubild entspricht.

Durch entsprechende Korrekturmaßnahmen, d.h. hier durch Ausgabe der Sollwertvorgaben S2b, S3b - d.h. z.B. Einstellen der Lage der Dosierorgane bzw. eines Einleitsystems 13 über der jeweiligen Schleuderscheibe und/oder der Drehzahl der Schleuderscheibe - lässt sich der Seitenwindeinfluss kompensieren, so dass wieder das Sollstreubild 16 entsteht.

Ein weiteres System ist das Grenzstreusystem 1c, das hier die Sollwertvorgaben S1c für die Mengenregelung, S2c für die Abwurfwinkelregelung und S3c für die Wurfweitenregelung an das Mastersystem 2 abgibt. Beim Düngerstreuen an der Feldgrenze muss sichergestellt werden, dass kein oder nur geringe Mengen an Dünger über eine Feldgrenze geworfen wird. Unter Grenzstreuen fällt hier sowohl das Streuen an einer Grenze zu einem Nachbarfeld, an der Grenze zu einem Graben oder am Feldende. Das heißt, unter Grenzstreuen fällt hier auch das Randstreuen und Grabenstreuen. Das heißt, dass beim Grenzstreuen das Streubild auf der Seite, die der Grenze zugewandt ist, eine kleinere seitliche Ausdehnung hat als das Grundstreubild, wobei die Stellglieder, die der Schleuderscheibe 5, die der Grenze zugewandt ist, zugeordnet sind über die Sollwertvorgaben entsprechend gesteuert bzw. geregelt werden. Wenn die beiden Schleuderscheiben links und rechts unterschiedlich angesteuert werden müssen, beispielsweise infolge von Seitenwind oder aber beim Grenzstreuen, so werden entsprechend unterschiedliche Sollwertvorgaben S1a-f, S2a-f, S3a-f an die jeweiligen Stellglieder auf der entsprechenden Seite dem Mastersystem 2 zugeführt, der dann entsprechende Sollwerte S1,S2,S3 ermittelt.

Ein weiteres System ist die Teilbreitenschaltung 1d, die ein Streubild einer vorbestimmten Arbeitsbreite erzeugen soll. Hier werden die Sollwertvorgaben derart angepasst, dass eine bestimmte Breite nicht unter bzw. überschritten wird. Das System 1d gibt entsprechende Werte S1d, S2d und S3d aus. In Abhängigkeit der gewünschten Breite muss nämlich auch die ausgebrachte Menge pro Zeit angepasst werden, um zu einer gleichmäßigen Düngerverteilung zu gelangen.

Ein weiteres System ist das Erkennungssystem 1e zum Erfassen eines Ist-Streubildes und Anpassen des Ist-Streubildes an ein Grundstreubild bzw. Sollstreubild, in Fig. 4 mit "autom. Streuereinstellung" bezeichnet. Dieses System 1e kann das Ist-Streubild an Hand diverser in einem Speicher hinterlegter Sollwertvorgaben, wie insbesondere Arbeitsbreite oder Wurfweite beeinflussen und eine automatische Einstellung der Streuerparameter in der Weise veranlassen, dass diese Sollwertvorgaben durch das Master-System entsprechend der übergebenen Parameter S2e und S3e eingeregelt werden.

Ferner gibt es noch das System 1f, hier als "Switch point-System" bezeichnet, das die Sollwertvorgaben S1f, S2f, S3f an das Mastersystem 2 ausgibt. Das Switch-Point-System berechnet optimale Vorgaben zum Einstellen eines Streuers in annähernd rechtwinkligen (45°-135°) Vorgewendesituationen. Hier werden in Abhängigkeit vom Winkel zwischen Feldfahrgasse und Vorgewendefahrgasse und dem Abstand des Streufächers von der Vorgewendefahrgasse bzw. dem Grenzstreubild optimale Einstellungen der Streumenge, Streurichtung und Wurfweite vorgenommen.

Die Sollwertvorgaben werden von den diversen Systemen 1a-1f über diverse Algorithmen oder Tabellen, die z.B. in einer Steuereinrichtung oder einem Bordcomputer 11 hinterlegt sind, ermittelt.

Damit es bei der Verwendung der mehreren Systeme 1a-fzu keinem Überschneiden bzw. keiner Kollision kommt und ein ideales Streubild erzeugt werden kann, ist das Mastersystem 2 derart ausgelegt, dass eines der mehreren Systeme 1a-f beispielsweise ausgewählt werden kann und dieses System Priorität hat, um dann Stellglieder (wie beispielsweise den Aktor 9 eines jeweiligen Düngerdosierorgans 8 oder eine Einrichtung zum Einstellen der Position der Aufgabefläche auf der jeweiligen Schleuderscheibe 5 oder den Antrieb der jeweiligen Schleuderscheibe) anzusteuern bzw. als Grundlage für eine entsprechende Regelung zu dienen. Das Mastersystem 2 ermittelt und leitet dann entsprechende Sollwerte S1, S2, S3 (Fig. 4) zu den jeweiligen Regelsystemen R1, R2, R3. Die Auswahl eines entsprechenden Systems kann beispielsweise in Abhängigkeit eines Parameters und/oder Messparameters erfolgen.

Somit kann beispielsweise im Mastersystem abgelegt sein, dass wenn das Windsteuersystem 1b aktiv ist, da Wind gemessen wird, insbesondere bei einer Windstärke, die größer ist als ein bestimmter Grenzwert, nur das Windsteuersystem berücksichtigt wird. Die anderen Systeme werden dabei dann nicht berücksichtigt. Es ist z.B. auch möglich, dass bei einer zu großen Abweichung zwischen Soll- und Ist-Streubild das System 1e zum Erfassen des Ist-Streubilds und Anpassen des Ist-Streubilds zunächst neue Sollwertvorgaben für die Sollparameter erstellt, und die anderen Systeme zunächst unberücksichtigt bleiben, bis das Ist-Streubild wieder dem Grundstreubild bzw. Sollstreubild entspricht.

Es ist jedoch auch möglich, dass das Mastersystem mehrere Systeme auswählt, und die Sollwertvorgaben (S1a-f, S2a-f, S3a-f) der ausgewählten Systeme für die jeweiligen Stellglieder 1a-f verrechnet. Dies kann beispielsweise erfolgen durch im Mastersystem gespeicherte Algorithmen, wobei beispielsweise ein Mittelwert der Sollwertvorgaben gebildet wird oder aber die Sollwertvorgaben unterschiedlich gewichtet oder über Formeln miteinander verrechnet werden. Unter Verrechnen der Sollwertvorgaben wird auch verstanden, dass bei mehreren Sollwertvorgaben für ein und dasselbe Stellglied die Sollwertvorgaben von manchen Systemen nicht berücksichtigt werden, z.B. mit einem Faktor Null multipliziert werden. Das bedeutet, dass es somit auch möglich ist, dass Sollwertvorgaben bestimmter Systeme Priorität haben und manche nicht berücksichtigt werden. Manche Systeme geben jedoch auch keine Sollwertvorgaben für bestimmte Sollwerte aus. So gibt beispielsweise das System 1a zum Anpassen der Düngerkonzentration nur eine Sollwertvorgabe S1a für die Menge, d.h. den Sollwert S1 aus. Bezüglich der Abwurfwinkelregelung, Sollwert S2 oder Wurfweitenregelung, d.h. Sollwert S3, gibt das System 1a keine Sollwertvorgabe aus.

So ist z.B. zu jeder Sollwertvorgabe angegeben, in welcher Weise diese zu verarbeiten ist, z.B. als Differenz (z.B. bei Abwurfwinkel oder Scheibendrehzahl), oder als Faktor/Relativwert (z.B. bei der Düngermenge/pro Zeit).

Für den Sollwert S1 zur Mengenregelung kann beispielsweise die Menge als Faktor angegeben werden. So kann eine Sollwertvorgabe, z.B. S1a, 90 % von einem Grundwert betragen und eine weitere Sollwertvorgabe, z.B. S1c z.B. 80 %, wobei dann der Sollwert S1 aus dem Produkt der Sollwertvorgaben/100 gebildet wird und hier somit 72 % der Grundmenge entspricht.

Der Abwurfwinkel (z.B. mit Scheitel im Schleuderscheibenzentrum) kann aus einer Differenz zweier Sollwertvorgaben gebildet werden, beispielsweise bei einer ersten Sollwertvorgabe von beispielsweise S3b 10°(Verstellung zu einem Abwurfwinkel eines Grundstreumusters in eier ersten Richtung) und einer zweiten Sollwertvorgabe z.B. S3c von -5° (Verstellung zu einem Abwurfwinkel des Grundstreumusters entgegengesetzt zu der ersten Richtung), wobei sich ein Sollwert S3 ergibt aus S3 = +10° - 5° = 5° (Verstellung zu einem Abwurfwinkel des Grundstreumusters).

Die Scheibendrehzahl kann beispielsweise als Differenz ermittelt werden, wobei beispielsweise eine erste Scheibendrehzahlvorgabe S3e bei 800 Upm liegt, eine zweite Sollwertvorgabe S3d bei -100 Upm und eine dritte Sollwertvorgabe S3b bei 50 Upm. Daraus kann der Sollwert aus der Summe von 800 Upm + (- 100 Upm) + 50 Upm = 750 Upm berechnet werden. In gleicher Weise kann unmittelbar die Wurfweite als Differenz oder Faktor ermittelt werden.

Wie bereits erläutert, können die entsprechenden Algorithmen im Mastersystem 2 abgelegt sein. Es ist auch möglich, dass sich die einzelnen Systeme beim Master-system anmelden mit der Angabe, wie die Sollwertvorgaben zu verrechnen sind.

Wie die Werte zu verrechnen sind, hängt davon ab, welche Systeme ausgewählt werden und kann auch von bestimmten Messparametern und/oder vorab eingegebenen Parametern abhängen. Übersteigt beispielsweise die Windstärke eine vorbestimmte Windstärke, kann beispielsweise bestimmt werden, dass entweder das Windsteuersystem 1b stärker gewichtet wird oder ausschließlich zur Erzeugung der Sollwerte für die jeweilige Regelung dient.

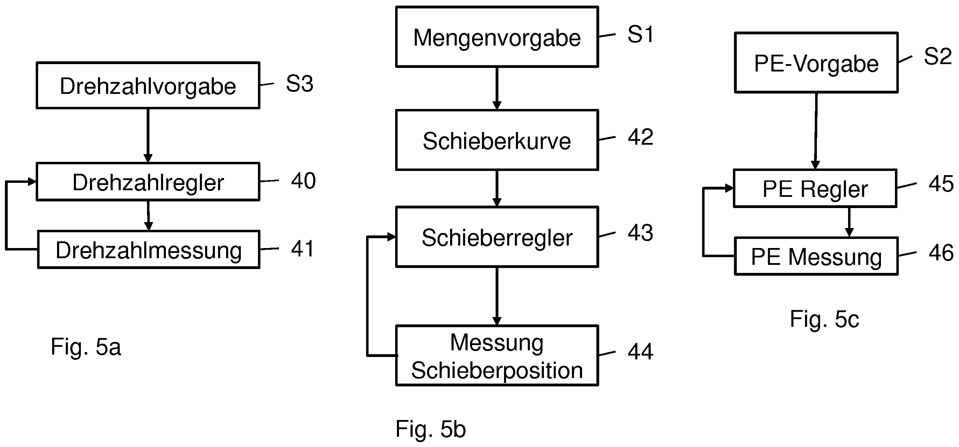

Wie aus Fig. 4 hervorgeht, werden somit die Sollwertvorgaben S1, S2, S3 für die verschiedenen Stellglieder 4,9 ermittelt. Auf der Grundlage der Sollwerte erfolgt eine Regelung über entsprechende Regelsysteme, wie beispielsweise in Fig. 5a, b, c dargestellt ist.

Fig. 5a, b, c zeigen klassische Regelsysteme für den Düngerstreuer. Fig. 5a zeigt die Regelung für einen Antrieb 4 einer der beiden Schleuderscheiben. Als Sollwert S3 wird über das Mastersystem 2 eine Drehzahlvorgabe an das Regelsystem bzw. den Drehzahlregler geleitet. Im Drehzahlregler 40 wird eine von einem Drehzahlmesser 41 gemessene Ist-Drehzahl mit dem Sollwert für die Drehzahl verglichen und der Antrieb 4 entsprechend angesteuert.

Fig. 5b zeigt die Regelung der Mengenvorgabe als Beispiel. Hier wird die Mengenvorgabe in Form des Sollwerts S1 vom Mastersystem ausgegeben. Die vorgegebene Menge kann beispielsweise mit Hilfe einer Schieberkurve einer bestimmten Soll-Schieberposition zugeordnet werden, wie durch das Bezugszeichen 42 gekennzeichnet ist. Der Schieberregler 43 misst die Schieberposition (siehe Bezugszeichen 44) mit einem entsprechenden Messglied und regelt durch entsprechenden Soll-Ist-Vergleich die Schieberposition, die einer bestimmten Mengenvorgabe entspricht.

Fig. 5c zeigt die Regelung des Abwurfwinkels, wobei als Sollwertvorgabe S2 (Bezugszeichen 52) einem Regler, siehe Bezugszeichen 45, ein entsprechendes Sollwertsignal zugeleitet wird, das einer bestimmten Stellung eines Einleitsystems 13 über einer jeweiligen Schleuderscheibe 5 entspricht. Durch ein entsprechendes Messglied kann die Position des Einleitsystems oder der Auftrefffläche gemessen werden und diese Position durch einen entsprechenden Regler geregelt werden.

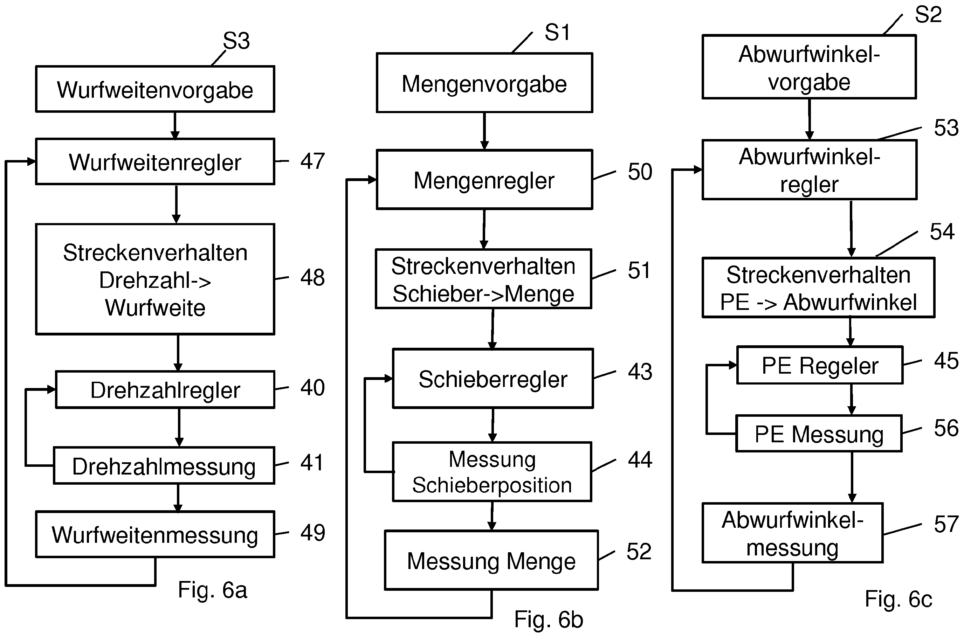

Besonders vorteilhaft sind die in Fig. 6a-6c gezeigten Regelsysteme.

Fig. 6a betrifft die Wurfweitenregelung. Hier wird vom Mastersystem 2 eine Wurfweitenvorgabe S3, d.h. ein Sollwert, der die Wurfweite angibt, an einen Wurfweitenregler 47 weiter geleitet. Diese Wurfweite wird anhand von z.B. vorab eingespeicherten Werten einer bestimmten Drehzahl, die der Stellgröße entspricht, zugeordnet, siehe Bezugszeichen 48. Diese Drehzahl wird einem Drehzahlregler 40 zugeleitet, wobei die Drehzahl, wie durch Bezugszeichen 41 angedeutet ist, gemessen wird und in dem inneren Regelkreis, wie durch den Pfeil dargestellt ist, geregelt wird. Als Regelgröße wird nun der Istwert der Wurfweite über ein entsprechendes Messglied gemessen, siehe Bezugszeichen 49. Als Messglied für die Wurfweite kann beispielsweise ein Radarsensor, Ultraschallsensor, eine Kamera verwendet werden. Der Istwert wird zum Wurfweitenregler 47 weiter geleitet, der den Istwert mit dem Sollwert S3 vergleicht, um eine Stellgröße entsprechend anzupassen d.h. eine entsprechende Drehzahl in Schritt 48 ermittelt, wobei erneut die innere Drehzahlregelung wie zuvor beschrieben erfolgt. Eine entsprechende Regelung, wobei die tatsächliche Wurfweite als Regelgröße geregelt wird, ist genauer als eine einfache Drehzahlregelung, wie sie in Fig. 5a gezeigt ist.

Fig. 6b zeigt ein Regelsystem für die Menge bzw. Düngermenge pro Zeit, die abgeworfen wird. Der Sollwert S1 wird einem Mengenregler 50 zugeführt. Dieser gibt ein entsprechendes Signal weiter, wobei eine entsprechende Menge einer Schieberstellung bzw. Schieberposition als Stellgröße zugeordnet wird. Die Verstelleinrichtung, d.h. der Aktor 9 des Dosierelements 8 ist hier das Stellglied. Die Stellung des Schiebers bestimmt die Größe der Öffnung, durch die Dünger auf die Schleuderscheibe 5 fallen kann. Nach der Zuordnung im Schritt 51 z.B. durch entsprechend vorab abgespeicherte Werte erfolgt in einem inneren Regelkreis 43, 44 die Regelung der Schieberposition, wobei ein entsprechendes Messglied die Schieberposition erfasst, und durch Soll-Ist-Wert-Vergleich die korrekte Schieberstellung eingestellt wird, wie in Fig. 5b beschrieben wurde.

Dann wird die tatsächlich abgeworfene Menge an Dünger pro Zeiteinheit gemessen (Bezugszeichen 52). Ein entsprechendes Messglied kann beispielsweise eine Torsion der Antriebswelle der Schleuderscheibe 5 messen, wobei sich die Torsion in Abhängigkeit der abgegebenen Menge ändert. Die abgegebene Menge kann auch über eine Wiegeeinrichtung erfasst werden, die die Abnahme des in einem Vorratsbehälter vorhandenen Düngers bestimmen kann. Die Menge kann auch über einen Füllstandsmesser im Vorratsbehälter bestimmt werden. Wie aus Fig. 6b hervorgeht, wird ein entsprechender Istwert an den Mengenregler, siehe 50, weiter geleitet, wobei nach einem Soll-Istwert-Vergleich die Stellgröße (siehe Schritt 51) angepasst wird und dem Schieberegler 43 zugeführt wird, um im inneren Regelkreis die Schieberposition zu regeln. Eine Regelung der Menge ist genauer als die in Fig. 5b gezeigte Mengenregelung.

Fig. 6c zeigt ein Regelsystem für den Abwurfwinkel. Vom Mastersystem 2 wird ein Sollwert S2 an den Abwurfwinkelregler 53 geleitet. In einem Schritt 54 wird, beispielsweise durch Vergleich mit vorab eingespeicherten Werten, der Abwurfwinkel einer bestimmten Position des Einleitsystems 13 (PE-Position) zugeordnet. Eine entsprechende Stellgröße wird als Sollwert für einen inneren Regelkreis dem Regler 45 zugeleitet, wobei eine entsprechende Position, wie vorab in Zusammenhang mit Fig. 5c erläutert wurde, über ein entsprechendes Messglied in Schritt 56 ermittelt wird. Nun wird über ein entsprechendes Messglied 57 der tatsächliche Abwurfwinkel gemessen, beispielsweise mit Hilfe von Ultraschallsensoren, Kameras, Radarsensoren etc. Der entsprechende Abwurfwinkel wird als Istwert dem Abwurfwinkelregler 53, der Soll- und Istwert vergleicht, zugeführt. Bei Abweichung wird ein angepasster Stellwert, der die Stellung des Einleitsystems angibt, als Sollwert dem Regler 45 zugeführt.

Es ist auch möglich, dass die Funktionen des Mastersystems mit mindestens einem der Systeme 1a-f zu einer Einheit zusammengefasst sind und die anderen Systeme mit dieser Einheit zur Datenübertragung verbunden sind.

## Patentansprüche

1. Verfahren zum Erzeugen eines Streubildes mit einem Düngerstreuer, wobei mehrere Systeme (1a-1f) mindestens eine Sollwertvorgabe (S1, a-f; S2, a-f; S3, a-f) zum Ansteuern/Regeln von Stellgliedern (1a-1f) zum Erzeugen eines entsprechenden Streubildes vorgeben, wobei
ein Mastersystem (2) in Abhängigkeit von mindestens einem vorbestimmten Parameter und/oder mindestens einem Messparameter entweder
eines der mehreren Systeme (1a-1f) auswählt, und diesem System den Vorrang gibt, um die Stellglieder in Abhängigkeit seiner Sollwertvorgaben (S1, a-f; S2, a-f; S3, a-f) anzusteuern oder
mehrere Systeme (1a-1f) auswählt und die Sollwertvorgaben (S1a-f; S2a-f; S3a-f) der ausgewählten Systeme für die jeweiligen Stellglieder (1a-1f) miteinander verrechnet, **dadurch gekennzeichnet, dass** die Systeme (1a-1f) mindestens zwei Systeme aus folgender Gruppe sind:
- System (1c) zum Erzeugen eines Grenzstreubildes beim Grenzstreuen an einer Feldgrenze,
- Windsteuersystem (1b) zum Erzeugen eines Streubildes in Abhängigkeit der Windstärke und Windrichtung,
- System (1a) zum Anpassen der Düngerkonzentration in Abhängigkeit des Ortes,
- System zur Teilbreitenstreuung (1d), zur Erzeugung eines Streubildes einer vorbestimmten Breite,
- Erkennungssystem (1e) zum Erfassen eines Ist-Streubildes und Anpassen des Ist-Streubildes an ein Grundstreubild,
- Switch-Point (1f) zur optimierten Einstellung des Düngerstreuers bei annähernd rechtwinkligen Vorgewendesituationen, vorzugsweise zwischen 45° und 135°, in Abhängigkeit vom Abstand zur Vorgewendefahrgasse oder zum Grenzstreubild und/oder in Abhängigkeit vom Winkel zur Vorgewendefahrgasse oder Grenzstreubild.

2. Verfahren nach Anspruch 1, **dadurch gekennzeichnet, dass** in Abhängigkeit von mindestens einem vorbestimmten Parameter und/oder mindestens einem Messparameter bestimmt wird, welches System (1a-1f) ausgewählt wird.

3. Verfahren nach mindestens einem der Ansprüche 1-2, **dadurch gekennzeichnet, dass** in Abhängigkeit des mindestens einen vorbestimmten Parameters und/oder mindestens einen Messparameters bestimmte Systeme aus den mehreren Systemen (1a-1f) ausgewählt werden und insbesondere entsprechende Algorithmen zum Verrechnen der Sollwertvorgaben ausgewählt werden.

4. Verfahren nach mindestens einem der vorhergehenden Ansprüche, **dadurch gekennzeichnet, dass** von dem Mastersystem Sollwerte (S1, S2, S3) oder entsprechend proportionale Werte aus folgender Gruppe an Regeleinrichtungen (R1; R2; R3) der entsprechenden Stellglieder geleitet werden:
- Düngermenge pro Zeit,
- Abwurfwinkel, insbesondere Position einer Aufgabefläche auf der Schleuderscheibe,
- Wurfweite, insbesondere Drehzahl.

5. Verfahren nach mindestens einem der Ansprüche 1-4, **dadurch gekennzeichnet, dass** die Stellglieder Stellglieder aus folgender Gruppe sind:
- Aktor (9) eines jeweiligen Düngerdosierorgans (8),
- Einrichtung zum Einstellen der Position der Aufgabefläche auf der jeweiligen Schleuderscheibe (5),
- Antrieb (4) der jeweiligen Schleuderscheibe (5).

6. Verfahren nach mindestens einem der Ansprüche 1-5, **dadurch gekennzeichnet, dass** ein Regelsystem (R3) als Regelgröße die Wurfweite und/oder ein Regelsystem (R1) die Düngermenge/Zeit und/oder ein Regelsystem (R3) den Abwurfwinkel regelt.

7. Verfahren nach mindestens einem der Ansprüche 1-6, **dadurch gekennzeichnet, dass** das Mastersystem (2) mindestens eines der Systeme (1a-1f), insbesondere das Erkennungssystem und/oder das Windsteuersystem als System bestimmt, das Priorität hat und die Sollwerte für ein Sollstreubild vorgibt.

8. Verfahren nach Anspruch 7, **dadurch gekennzeichnet, dass** das Mastersystem die bestimmten Sollwerte des Soll-Streubild durch mindestens ein weiteres System anpasst.

9. Düngerstreuer zum Erzeugen eines vorbestimmten Streubildes, insbesondere mit einem Verfahren nach mindestens einem der Ansprüche 1-8 mit mehreren Systemen zum Erzeugen von mindestens einer Sollwertvorgabe (S1, a-f; S2, a-f; S3, a-f) zum Ansteuern/Regeln von Stellgliedern zum Erzeugen eines Streubildes, umfassend:
- ein Mastersystem (2), das in Abhängigkeit von mindestens einem vorbestimmten Parameter und/oder mindestens einem Messparameter entweder
- eines der mehreren Systeme (1a-1f) auswählt und diesem System (1a-1f) den Vorrang geben kann, um die Stellglieder in Abhängigkeit seiner Sollwertvorgaben (S1, a-f; S2, a-f; S3, a-f) anzusteuern oder
- mehrere Systeme auswählt und Sollwertvorgaben der ausgewählten Systeme miteinander verrechnen kann, **dadurch gekennzeichnet, dass**
die Systeme (1a-1f) mindestens zwei Systeme aus folgender Gruppe sind:
- System (1c) zum Erzeugen eines Grenzstreubildes beim Grenzstreuen an einer Feldgrenze
- Windsteuersystem (1b) zum Erzeugen eines Streubildes in Abhängigkeit der Windstärke und Windrichtung
- System (1a) zum Anpassen der Düngerkonzentration in Abhängigkeit des Ortes,
- System zur Teilbreitenstreuung (1d), zur Erzeugung eines Streubildes einer vorbestimmten Breite,
- Erkennungssystem (1e) zum Erfassen eines Ist-Streubildes und Anpassen des Ist-Streubildes an ein Grundstreubild,
- Switch-Point (1f) zur optimierten Einstellung des Düngerstreuers bei annähernd rechtwinkligen Vorgewendesituationen, vorzugsweise zwischen 45° und 135°, in Abhängigkeit vom Abstand zur Vorgewendefahrgasse oder zum Grenzstreubild und/oder in Abhängigkeit vom Winkel zur Vorgewendefahrgasse oder Grenzstreubild.

10. Düngerstreuer nach Anspruch 9,
**dadurch gekennzeichnet, dass** das Mastersystem
eine getrennte Einheit ist, mit der die anderen Systeme zur Datenkommunikation verbunden sind oder dass die Funktionen des Mastersystems mit mindestens einem der Systeme (1a-1f) zu einer Einheit zusammengefasst sind und die anderen Systeme mit dieser Einheit zur Datenübertragung verbunden sind.

## Claims

1. Method for generating a spreading pattern with a fertilizer spreader, wherein a plurality of systems (1a-1f) specify at least one target value specification (S1, a-f; S2, a-f; S3, a-f) for actuating/controlling control elements (1a-1f) for generating a corresponding spreading pattern, wherein
a master system (2), depending on at least one predetermined parameter and/or at least one measurement parameter, either
selects one of the plurality of systems (1a-1f), and gives this system priority to actuate the control elements depending on the target value specifications (S1, a-f; S2, a-f, S3, a-f) thereof, or
selects a plurality of systems (1a-1f) and offsets the target value specifications (S1a-f; S2a-f; S3a-f) of the selected systems against one another for the respective control elements (1a-1f),
**characterized in that**
the systems (1a-1f) are at least two systems from the following group:
- system (1c) for generating a boundary spreading pattern when boundary spreading at a field boundary,
- wind control system (1b) for generating a spreading pattern depending on the wind strength and wind direction,
- system (1a) for adjusting the fertilizer concentration depending on the location,
- system for part-width spreading (1d) for generating a spreading pattern of a predetermined width,
- detection system (1e) for detecting an actual spreading pattern and adjusting the actual spreading pattern to a basic spreading pattern,
- switch point (1f) for optimized setting of the fertilizer spreader in approximately right-angled headland situations, preferably between 45° and 135°, depending on the distance from the headland track or from the boundary spreading pattern and/or depending on the angle to the headland track or boundary spreading pattern.

2. Method according to claim 1, **characterized in that** it is determined which system (1a-1f) is selected depending on at least one predetermined parameter and/or at least one measurement parameter.

3. Method according to at least one of claims 1-2, **characterized in that** specific systems from the plurality of systems (1a-1f) are selected, and in particular corresponding algorithms for offsetting the target value specifications are selected, depending on the at least one predetermined parameter and/or at least one measurement parameter.

4. Method according to at least one of the preceding claims,
**characterized in that** target values (S1, S2, S3) or correspondingly proportional values from the following group of control devices (R1; R2; R3) of the corresponding control elements are passed on by the master system:
- fertilizer quantity per time,
- discharge angle, in particular position of a feed surface on the centrifugal disk,
- casting distance, in particular speed.

5. Method according to at least one of claims 1-4, **characterized in that** the control elements are control elements from the following group:
- actuator (9) of a relevant fertilizer dosing member (8),
- device for setting the position of the feed surface on the relevant centrifugal disk (5),
- drive (4) of the relevant centrifugal disk (5).

6. Method according to at least one of claims 1-5, **characterized in that** a control system (R3) controls, as a controlled variable, the casting distance and/or a control system (R1) controls the fertilizer/time and/or a control system (R3) controls the discharge angle.

7. Method according to at least one of claims 1-6, **characterized in that** the master system (2) determines at least one of the systems (1a-1f), in particular the detection system and/or the wind control system, to be a system which has priority and specifies the target values for a target spreading pattern.

8. Method according to claim 7, **characterized in that** the master system adjusts the determined target values of the target spreading pattern by at least one further system.

9. Fertilizer spreader for generating a predetermined spreading pattern, in particular using a method according to at least one of claims 1-8, comprising a plurality of systems for generating at least one target value specification (S1, a-f; S2, a-f; S3, a-f) for actuating/controlling control elements for generating a spreading pattern, comprising:
- a master system (2), which, depending on at least one predetermined parameter and/or at least one measurement parameter, either
- selects one of the plurality of systems (1a-1f), and can give this system (1a-1f) priority to actuate the actuators depending on the target value specifications (S1, a-f; S2, a-f, S3, a-f) thereof, or
- selects a plurality of systems and can offset target value specifications of the selected systems against one another,
**characterized in that**
the systems (1a-1f) are at least two systems from the following group:
- system (1c) for generating a boundary spreading pattern when boundary spreading at a field boundary,
- wind control system (1b) for generating a spreading pattern depending on the wind strength and wind direction,
- system (1a) for adjusting the fertilizer concentration depending on the location,
- system for part-width spreading (1d) for generating a spreading pattern of a predetermined width,
- detection system (1e) for detecting an actual spreading pattern and adjusting the actual spreading pattern to a basic spreading pattern,
- switch point (1f) for optimized setting of the fertilizer spreader in approximately right-angled headland situations, preferably between 45° and 135°, depending on the distance from the headland track or from the boundary spreading pattern and/or depending on the angle to the headland track or boundary spreading pattern.

10. Fertilizer spreader according to claim 9, **characterized in that** the master system is a separate unit to which the other systems are connected for data communication **or in that** the functions of the master system are combined with at least one of the systems (1a-1f) to form a unit and the other systems are connected to this unit for data transmission.

## Revendications

1. Procédé permettant la production d'une image d'épandage avec un épandeur d'engrais, dans lequel plusieurs systèmes (1a-1f) spécifient au moins une spécification de valeur de consigne (S1, a-f ; S2, a-f ; S3, a-f) pour la commande/la régulation d'actionneurs (1a-1f) pour la production d'une image d'épandage correspondante, dans lequel
un système maître (2) sélectionne, en fonction d'au moins un paramètre prédéterminé et/ou d'au moins un paramètre de mesure,
soit l'un des plusieurs systèmes (1a-1f) et donne la priorité audit système pour commander les actionneurs en fonction de ses spécifications de valeur de consigne (S1, a-f ; S2, a-f ; S3, a-f)
soit plusieurs systèmes (1a-1f) et calcule entre elles les spécifications de valeur de consigne (S1a-f ; S2a-f ; S3a-f) des systèmes sélectionnés pour les actionneurs (1a-1f) respectifs,
**caractérisé en ce que**
les systèmes (1a-1f) sont au moins deux systèmes parmi le groupe suivant :
- système (1c) permettant la production d'une image d'épandage limite lors de l'épandage limite au niveau d'une bordure de champ,
- système de commande du vent (1b) permettant la production d'une image d'épandage en fonction de la force du vent et de la direction du vent,
- système (1a) permettant l'ajustement de la concentration d'engrais en fonction de l'emplacement,
- système permettant l'épandage sur largeur partielle (1d), pour la production d'une image d'épandage d'une largeur prédéterminée,
- système de reconnaissance (1e) permettant la détection d'une image d'épandage réelle et l'ajustement de l'image d'épandage réelle sur une image d'épandage de base,
- système de point de commutation (1f) permettant le réglage optimisé de l'épandeur d'engrais dans des situations de tournière approximativement rectangulaires, de préférence entre 45° et 135°, en fonction de la distance par rapport à l'allée de circulation de tournière ou par rapport à l'image d'épandage limite et/ou en fonction de l'angle par rapport à l'allée de circulation de tournière ou à l'image d'épandage limite.

2. Procédé selon la revendication 1, **caractérisé en ce que**, en fonction d'au moins un paramètre prédéterminé et/ou d'au moins un paramètre de mesure, l'on détermine quel système (1a-1f) est sélectionné.

3. Procédé selon au moins l'une des revendications 1 à 2,
**caractérisé en ce que**, en fonction de l'au moins un paramètre prédéterminé et/ou d'au moins un paramètre de mesure, des systèmes déterminés parmi les plusieurs systèmes (1a-1f) sont sélectionnés et en particulier des algorithmes correspondants sont sélectionnés pour le calcul des spécifications de valeur de consigne.

4. Procédé selon au moins l'une des revendications précédentes,
**caractérisé en ce que** des valeurs de consigne (S1, S2, S3) ou des valeurs proportionnelles correspondantes parmi le groupe suivant sont transmises depuis le système maître vers des dispositifs de régulation (R1 ; R2 ; R3) des actionneurs correspondants :
- quantité d'engrais par période,
- angle de décharge, en particulier position d'une surface de sortie sur le disque centrifuge,
- distance de projection, en particulier vitesse de rotation.

5. Procédé selon au moins l'une des revendications 1 à 4,
**caractérisé en ce que** les actionneurs sont des actionneurs parmi le groupe suivant :
- actionneur (9) d'un organe de dosage d'engrais (8) respectif,
- dispositif permettant le réglage de la position de la surface de sortie sur le disque centrifuge (5) respectif,
- entraînement (4) du disque centrifuge (5) respectif.

6. Procédé selon au moins l'une des revendications 1 à 5,
**caractérisé en ce qu'**un système de régulation (R3) régule en tant que grandeur de régulation la distance de projection et/ou un système de régulation (R1) régule la quantité d'engrais/la période et/ou un système de régulation (R3) régule l'angle de décharge.

7. Procédé selon au moins l'une des revendications 1 à 6,
**caractérisé en ce que** le système maître (2) détermine en tant que système présentant la priorité et spécifiant les valeurs de consigne pour une image d'épandage de consigne au moins l'un des systèmes (1a-1f), en particulier le système de reconnaissance et/ou le système de commande du vent.

8. Procédé selon la revendication 7, **caractérisé en ce que** le système maître ajuste les valeurs de consigne déterminées de l'image d'épandage de consigne à l'aide d'au moins un autre système.

9. Épandeur d'engrais permettant la production d'une image d'épandage prédéterminée, en particulier avec un procédé selon au moins l'une des revendications 1 à 8, comportant plusieurs systèmes permettant la production d'au moins une spécification de valeur de consigne (S1, a-f ; S2, a-f ; S3, a-f) pour la commande/la régulation d'actionneurs pour la production d'une image d'épandage, comprenant :
- un système maître (2), lequel sélectionne, en fonction d'au moins un paramètre prédéterminé et/ou d'au moins un paramètre de mesure,
- soit l'un des plusieurs systèmes (1a-1f) et peut donner la priorité audit système (1a-1f) pour commander les actionneurs en fonction de ses spécifications de valeur de consigne (S1, a-f ; S2, a-f ; S3, a-f)
- soit plusieurs systèmes et peut calculer entre elles des spécifications de valeur de consigne des systèmes sélectionnés,
**caractérisé en ce que**
les systèmes (1a-1f) sont au moins deux systèmes parmi le groupe suivant :
- système (1c) permettant la production d'une image d'épandage limite lors de l'épandage limite au niveau d'une bordure de champ
- système de commande du vent (1b) permettant la production d'une image d'épandage en fonction de la force du vent et de la direction du vent
- système (1a) permettant l'ajustement de la concentration d'engrais en fonction de l'emplacement,
- système permettant l'épandage sur largeur partielle (1d), pour la production d'une image d'épandage d'une largeur prédéterminée,
- système de reconnaissance (1e) permettant la détection d'une image d'épandage réelle et l'ajustement de l'image d'épandage réelle sur une image d'épandage de base,
- système de point de commutation (1f) permettant le réglage optimisé de l'épandeur d'engrais dans des situations de tournière approximativement rectangulaires, de préférence entre 45° et 135°, en fonction de la distance par rapport à l'allée de circulation de tournière ou par rapport à l'image d'épandage limite et/ou en fonction de l'angle par rapport à l'allée de circulation de tournière ou à l'image d'épandage limite.

10. Épandeur d'engrais selon la revendication 9, **caractérisé en ce que** le système maître est une unité distincte à laquelle les autres systèmes sont connectés pour la communication de données **ou en ce que** les fonctions du système maître sont regroupées avec au moins l'un des systèmes (1a-1f) en une unité et les autres systèmes sont connectés à ladite unité pour la transmission de données.
